# EUROPEAN PATENT APPLICATION

(11) **EP 1 132 710 A1**
(43) Date of publication of application: **12.09.2001**
(21) Application number: 99923860.3
(22) Date of filing: 02.06.1999
(51) Int. Cl.: G01B 11/26

(54) **METHOD AND APPARATUS FOR DETECTING EDGE ANGLE**

(30) Priority: 28.08.1998 JP 24320198
(71) Applicant: Yoshino Gypsum Co., Ltd., Chiyoda-ku, Tokyo 100-0005 (JP)
(72) Inventor: SHIRATA, Shigeru, 4-35, Akemicho, Toyohashi-shi, Aichi 441 (JP)
(74) Representative: Zimmermann, Gerd Heinrich
(86) International application number: JP9902933
(87) International publication number: WO0012963

(57) **Abstract**

Method and apparatus for detecting the edge angle of a molded board of plaster to monitor it continuously and reliably. An edge angle detector comprises a light source (2), a CCD camera (3), andan image processor (31), and attached to a continuous board-manufacturing machine to detect the edge angle α of a molded boardof plaster (W). The light source is opposed to the side edge face(16) of the molded board of plaster to irradiate the side edge face continuously. The camera is arranged above the side edge face to receive the reflection from the edge and takes the images of the edge (15) continuously. The image processor detects the edge angle by measuring an apparent edge width E. The edge detector further includes a position detector (4) for measuring the distance to the edge, and a device (5) for moving the camera to a desired position depending on the results of detection by the position detector.

## Description

### Technical Field

The present invention relates to an apparatus and method for detecting an edge angle and, more particularly, to such an apparatus and method which can continuously and reliably monitor the edge angle of a molded gypsum board.

### Technical Background

As an interior finish material in buildings, gypsum boards provided with various type of edge shapes are widely in use, each gypsum board comprising a gypsum core covered with cover sheets of paper for the board. An apparatus for successively producing this kind of gypsum board is known in the art. Such an apparatus is equipped with a conveyor device for continuously conveying a cover sheet of paper (lower paper sheet) for gypsum board; a scoring device for scoring or creasing the paper sheet on its opposite sides; a slurry mixing device for producing a gypsum slurry; a folding device for shaping an edge portion mainly by folding the lower paper sheet; an upper paper laminating and forming device for laminating another cover sheet of paper for gypsum board (upper paper sheet) onto the gypsum slurry; a rough cutting device for roughly cutting a plate-like wet op green board product, or intermediate product into a predetermined board length; a drying device for drying a quantity of excessive water contained in the plate-like board; and a cutting and delivery device for finely cutting the board product to be a predetermined size and delivering it therefrom.

The gypsum board paper sheet (lower paper sheet) moves on the conveyor device, such as a belt or roller conveyor, and slides on a guide member or forming die constituting the board molding device, so that the lower paper sheet is folded along crease (score ) formed by the scoring device. As a result, edge faces of the gypsum board is formed at the opposite side edge zones of the gypsum board molding. On the other hand, a quantity of water, calcined gypsum (hemihydrate gypsum), foaming agent, adhesive assistant such as starch, and any desired admixtures such as cellulose fiber or inorganic fiber are introduced into an agitating mixer in the slurry mixing device. The gypsum slurry, which is obtained by agitating those materials of gypsum and admixtures, is discharged from the mixer onto the paper sheet (lower paper sheet). The other paper sheet for the board, which is an upper paper sheet, is laminated onto the gypsum slurry by means of the upper-paper laminating and forming device. Thus, a gypsum board molding is formed in a formation of three-layer and continuous strip-like plate, which comprises the gypsum slurry filled between the upper and lower paper sheets. During transfer on the conveyor device, the continuous gypsum board molding on the conveyor device (wet or green product, or intermediate product of gypsum board) sets as the hydration reaction of calcined gypsum (or dihydration of gypsum) progresses, and is roughly cut, and subsequently, is dried and is cut into a gypsum board product of a predetermined size by the cutting device, and is finally delivered as the product. Such an apparatus and method of producing the gypsum boards is disclosed, for example, in Japanese Patent Publication No. 43-12918.

The side edges of the gypsum boards are classified into different types of configuration, such as a square edge and a bevelled edge, under the present Japanese Industrial Standard (JIS A 6901), which defines that the side face is desired to be substantially perpendicular to the surfaces of the gypsum board. In the square- and bevelled-edge types of gypsum boards, the angle of the side edge face (edge angle) relative to the board surface (the plane of lower paper sheet) is practically limited to be in a range from 80 degrees to 90 degrees. If the edge angle is smaller than 80 degrees or greater than 90 degrees, the gypsum board products are rejected as a non-standard product. At present, it is difficult to desirably conduct shipping of these kind of non-standard products.

In order to prevent gypsum board products from being rejected, the edge angle is conventionally measured by manually performing a periodic visual inspection with use of an angle measurement tool, such as protractor or ruler. The scoring device is finely adjusted, based on the manually measured edge angle, whereby the folding angle of the score is experientially regulated. According to such a method of measuring the edge angle, the edge angle can be controlled to some extent within the desired range by the periodic inspection relatively frequently performed.

However, in such a periodic manual inspection, the edge angles cannot be continuously detected, and therefore, a relatively large amount of defective products may be successively produced, owing to any abnormality in edge angle occurring between the inspections. This causes the degradation of the production efficiency or yield.

On the contrary, it may be considered to use a contact-type edge-angle sensor for continuously detecting edge angles of gypsum board molding. As a contact-type sensor, a sensor may be exemplified, which is provided with a contact element continuously in contact with the edge face of gypsum board molding.

However, the fluidized gypsum slurry may partially flow out from the edge regions of gypsum board molding at a step of laminating the upper paper sheet or the like, so that the edge face of the gypsum board molding may be contaminated by the gypsum slurry or the slurry may be deposited on the edge face. Such slurry may cause a malfunction of the contact element for sensing the edge angle and lead to an error of the sensor, and therefore, frequent and complicated cleaning operation of the edge faces and contact element is needed. Further, the sensor components must be readjusted whenever the position of the gypsum board molding varies resulting from change of size of gypsum board product or change of edge configuration, which is involved in a change of specification of the product. Furthermore, when change or deviation of position of the gypsum board molding transferred on the conveyor device, or meander thereof may occur to unexpectedly vary the position of the edge face, the contact element can no longer keep a continuous contact with the edge face. Therefore, it is difficult to use such a contact-type edge angle detecting device for detecting the edge angle of the gypsum board molding.

It is therefore an object of the present invention to provide an edge angle detecting apparatus and method which can continuously and reliably monitor the edge angle of a gypsum board molding.

Another object of the present invention is to provide an edge angle detecting apparatus and method which can follow variations in the position of the gypsum board molding moving on the conveyor device, and continuously and reliably monitor the edge angle thereof.

Still another object of the present invention is to provide an edge angle detecting apparatus and method which can continuously and automatically monitor the edge angle of the gypsum board molding to reduce the frequency of the edge angle inspection, and can rapidly avoid continuing to produce defective products or products to be rejected, so as to improve the production efficiency on production of gypsum board products.

### Disclosure of the Invention

To accomplish the aforementioned objects, the present invention provides an apparatus for detecting an edge angle which is provided on a gypsum board producing apparatus for successively producing gypsum boards with a gypsum slurry filled between upper and lower paper sheets for gypsum board, and which is adapted to detect the edge angle of the gypsum board molding continuously transferred on a conveyor device, said apparatus comprising:
a light source for continuously emitting light for imaging toward the side edge region of a plate-like gypsum board molding, said gypsum board molding continuously extending in a direction of conveyance;
an image capturing device for continuously capturing an image of said side edge region; and
image processing means for detecting the edge angle of said side edge region, based on image data of said image capturing device,
wherein said light source is disposed laterally of said side edge region, opposing to the edge face of said side edge region, said image capturing device is disposed above said side edge region for receiving the light reflected from said edge face, and
said image processing means is adapted to measure an apparent edge width through image processing of the image of said edge face and to detect said edge angle on the basis of the measured edge width.

In such an arrangement, the light for imaging, which is emitted from the light source, is reflected by the edge face and the configuration or contour of the edge face is imaged on an imaging element of the image capturing device. The image of the edge portion is then inputted into the image processing means device as an image signal. The image processing device measures the edge width on the basis of the image of the edge portion. Since the image of the edge face picked up from the area above the edge region has a direct correlation with the edge angle, the image processing device detects the edge angle in dependence on the edge width. Thus, the edge angle of the gypsum board molding is continuously monitored by the aforementioned edge angle detecting apparatus. Further, the light-receiving part of the optical image capturing device constituting the edge angle detecting apparatus provides a non-contact type of sensor which is not in contact with the side edge region of the gypsum board molding. Therefore, a malfunction resulting from deposition of the gypsum slurry on the side edge region or any other cause can be avoided, and variations in the position of the gypsum board molding transferred on the conveyor device are permissible to some extent, so that cumbersome manual operations, such as a cleaning and adjusting operation which are conventionally required for inspection of the edge angle, can be greatly reduced.

The present invention also provides a method for detecting an edge angle, which is applied to a gypsum board producing process for filling a gypsum slurry between upper and lower paper sheets for gypsum board so as to form a plate-like gypsum board molding and continuously conveying the gypsum board molding on a conveyor device, and which continuously detects the edge angle of the gypsum board molding continuously transferred, said method comprising the steps of:
continuously irradiating a side edge region of said gypsum board molding with light for imaging;
continuously capturing an image of light reflected from said side edge region with use of an imaging element;
binarizing contrast information of the image made on said imaging element, so that the image signal is binarized into a light part and a dark part with reference to a binarization level set as a threshold value, and counting the number of pixels in the signal designated as the light part; and
computing said edge angle on the basis of the counted number of pixels.

In such an arrangement, the image of the edge portion is quantified by the binarization of the image signal. A set of pixels specified to be the light signal part by the binarization corresponds to the contour of the edge face. The edge width is measured by counting the number of pixels in the light signal part and the edge angle is detected in dependence on the edge width.

The present invention further provides an apparatus for detecting an edge angle, in addition to the aforementioned arrangement, further comprising an edge position detecting means for detecting the position of the side edge region and a light-receiving portion moving device for displacing the light-receiving portion of the image capturing device in a direction perpendicular to the direction of conveyance for the gypsum board molding,
wherein said edge position detecting means has position detection means for detecting the relative position between the image capturing device and the side edge region, and wherein said light-receiving portion moving device is adapted to displace the light-receiving portion with respect to the gypsum board molding, so that the variation in the relative position is corrected.

In such an arrangement, if the side edge region in the gypsum board molding is changed in its position owing to any cause, such as change of the type of gypsum board, change of the length and width in the gypsum board, exchange or size change of the paper sheet roll, or unexpected deviation of the transfer path of gypsum board molding, the edge position detecting means detects the displacement of the edge portion, and the light-receiving portion moving device moves the light receiving portion of the image capturing device by an amount in correspondence with the displacement of the side edge region so as to displace the light receiving portion to a position suitable for imaging the edge portion. Thus, the image capturing device can follow the change in the position of side edge region so as to always take the image of the side edge region in a proper position, whereby the edge angle can be continuously monitored reliably.

The edge-angle detecting method of the present invention may further comprise the steps of continuously measuring the position of the side edge region with use of a non-contact type of position sensor, moving the image capturing element in a widthwise direction of the gypsum board molding in dependence on the measured value of the position sensor, and correcting the variation in the relative position between the side edge region and the image capturing element. In such an arrangement, the side edge region of the gypsum board molding can be continuously monitored by the position sensor and the image capturing element of the image capturing device can be properly moved, depending on the change in the distance between the position sensor and the side edge region.

From another aspect, the present invention provides a gypsum board producing apparatus including the aforementioned edge angle detecting apparatus and a gypsum board producing method to which the aforementioned edge angle detecting method is applied.

In such gypsum board producing apparatus and method, the edge angle is continuously monitored so that the producing apparatus is maintained and controlled in a proper operation mode and condition, whereby the edge angle is maintained within an permissible range. In addition, if any defective product is produced due to failure in the edge angle, the producing process can be early interrupted and restored to the proper producing process rapidly and early. This improves the production efficiency and yield in the production of gypsum boards.

In one preferred embodiment of the present invention, the light source may be a high-frequency lighting type of image processing light source and the image capturing device has a light receiving portion with a charge coupled device. Preferably, the light source may be a high-frequency lighting type of fluorescent lamp, such as halogen lamp, and the light receiving portion is a CCD camera. The high-frequency lighting type of image processing light source is disposed in a lateral position of the side edge region, so that the light from the light source is continuously irradiated to the side edge region. The light receiving portion including the charge coupled device (CCD) is disposed above the side edge region, so that the light reflected from the edge face of the side edge region is imaged onto the charge coupled device which acts as the image capturing element. Thus, the image capturing device functions as an image sensor for taking the image of the edge face. The image data is inputted from the image capturing device into the image processing device.

In a further preferred embodiment of the present invention, the image processing device comprises a binarizing portion for receiving the image signals from the image capturing device and a numerical control portion for computing the edge angle on the basis of the edge width obtained by the binarizing portion. The binarizing portion binarizes the contrast information of the image signal with reference to a predetermined binarization level and also counts the number of pixels that represents the magnitude of light equal to or higher than the binarization level. The numeral control portion determines the edge width on the basis of the counted number of pixels and computes the edge angle from the edge width.

Preferably, the binarizing portion of the image processing device sets a measurement reference line extending across the width of the gypsum board molding in the side edge region, binarizes the image signal obtained along the reference line, and counts the number of pixels in the image signal representing the magnitude of light equal to or higher than the binarizing level. The numeral control portion computes the length corresponding to the counted number of pixels on the reference line so as to detect the edge angle. Therefore, the image capturing and image processing devices function as a line image sensor for detecting the width of the edge face which is represented on the reference line as viewed from the above area. Thus, the edge angle, which can be computed directly from the width of edge and the thickness of gypsum board, is obtained by the detected edge width.

In a further preferred embodiment of the present invention, the light receiving portion and position detection means are securely carried by a support which is movable in a widthwise direction of the gypsum board molding. The position detection means may be a non-contact type of position sensor which can measure the distance between the sensor and the edge portion. The light-receiving portion moving device includes drive means which can cause the support to wholly move in such a manner that the value detected by the position sensor can converge at a preset value of distance. The non-contact type of position sensor continuously measures the position of the side edge region. Based on the measurement of the position sensor, the image capturing element is moved in the widthwise direction of the gypsum board molding. As a result, the variation in the relative position between the side edge region and the image capturing element is corrected. Preferably, an electronic control device, such as programmable controller, is used to carry out an automatic control for keeping a substantially constant positional relationship between the side edge region and the image capturing element, whereby the image capturing element can be automatically positioned in a proper location for taking the image of the edge portion. Thus, adjustment of the position of the image capturing element, which is involved in a change of the production condition of gypsum boards, can be automated, and the maintenance and management in the production of gypsum boards can be simplified.

The position sensor is preferably a sensor which is less influenced by the contaminant or deposition on the surface to be measured (edge face), such as a non-contact type of distance sensor. The distance sensor is preferably a conventional non-contact type of sensor having LED light source, capacitance type of non-contact sensor and so forth, and more preferably, a sensor of a type that is less influenced by the surrounding circumstance, such as a non-contact type of laser displacement sensor.

In one preferred embodiment of the present invention, said light source, light receiving portion and laser displacement sensor are securely mounted on a support which is movable in a direction perpendicular to the direction of conveyance of the gypsum board molding. The support is connected to drive means such as a reversible electric motor. When the drive means is activated, the support is moved toward or away from the gypsum board molding. The displacement sensor emits a laser beam toward the edge portion of the gypsum board molding and measures the distance between the sensor and the edge portion. The drive means displaces the support, based on the measurement results of the displacement sensor, so that the relative position between the light source, light receiving portion and the edge portion is to be always kept in a constant condition.

In a preferred embodiment of the gypsum board producing apparatus, the apparatus comprises a guide member used to fold the side edge region of the paper sheet for gypsum board and a guide-member correcting device for correcting the position and/or formation of the guide member. The correcting device adjusts the position and/or formation of the guide member to correct the bending angle of the side edge region of the paper sheet, when the edge angle detected by the edge angle detecting device does not fall under a predetermined range of angle. The bending angle in the side edge region may be finely adjusted by manual adjustment operation for the guide member.

In a further preferred embodiment of the gypsum board producing apparatus, the apparatus further comprises a scoring device for scoring the side edge region of the paper sheet for gypsum board, and a scoring correction device for correcting a scoring action of the scoring device. Preferably, the scoring correction device adjusts the scoring action of the scoring device to correct the bending angle in the side edge region of the paper sheet, when the edge angle detected by the edge-angle detecting device does not fall under the predetermined range of angle. The scoring operation of the scoring device may be finely adjusted by manually adjusting the position for the scoring tool.

More preferably, the gypsum board producing apparatus comprises an edge angle rectifying device for rectifying the edge angle. The rectifying device includes side-edge pressing means, which presses the edge face of the side edge region to rectify the edge angle when the edge angle detected by the edge-angle detecting device is not within the predetermined range of angle. For example, if the edge angle exceeds 90 degrees so as to make a so-called "inverse edge" in the gypsum board, the side-edge pressing means urges the upper portion of the edge face to rectify the edge face to be a substantially vertical plane. The operation of the rectifying means may be regulated or finely adjusted by an automatic control or a manual operation.

The edge-angle detecting device and method according to each of the aforementioned embodiments of the present invention allows the edge angle to be continuously monitored, and enables the adjustment of the edge angle to be automatically controlled, whereby it is possible to effectively promote reduction of load involved in maintenance and management for the gypsum board producing process.

### Brief Description of the Drawings

Fig. 1 is a schematic front view generally illustrating an edge-angle detecting device according to a preferred embodiment of the present invention.

Fig. 2 is a longitudinal cross-sectional view partially showing a gypsum board molding having a square edge formation.

Fig. 3 is a longitudinal cross-sectional view partially showing a gypsum board molding having a bevelled edge formation.

Fig. 4A is a plan view showing an area of the edge portion, to which the CCD image capturing device shown in Fig. 1 is directed.

Fig. 4B is a diagram of signal levels of the CCD image capturing device, which illustrates a binarizing process in the image processing device.

Fig. 5 is a schematic side view partially showing the structure of a gypsum board producing apparatus having the edge angle detecting device.

Fig. 6 is a plan view partially showing the gypsum board producing apparatus as shown in Fig. 5.

Fig. 7 is a longitudinal cross-sectional view partially showing the gypsum board producing apparatus as shown in Figs. 5 and 6.

### Best Mode for carrying out the Invention

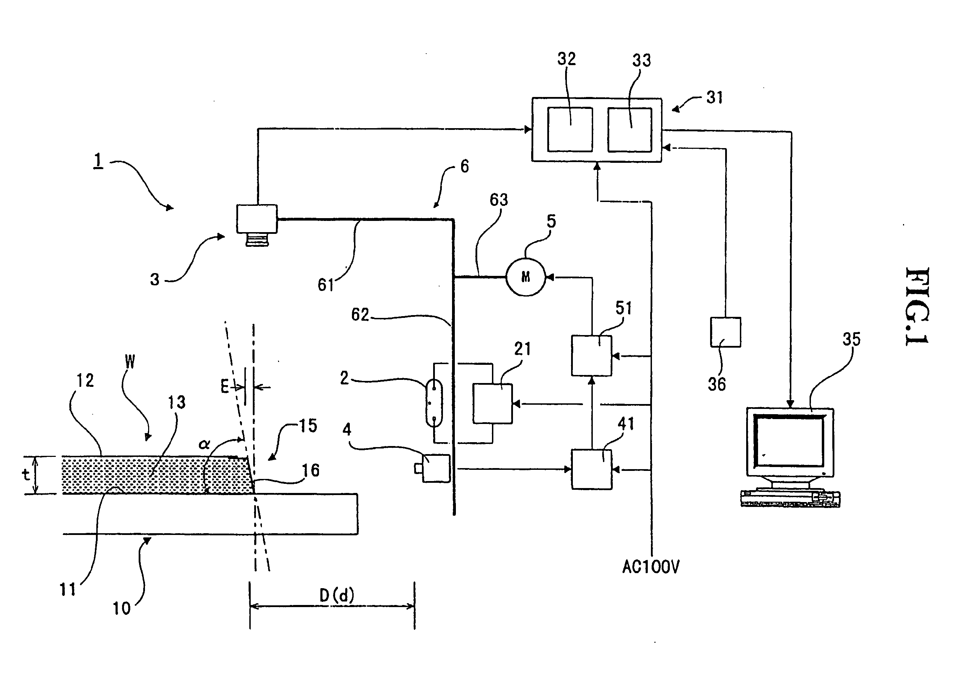

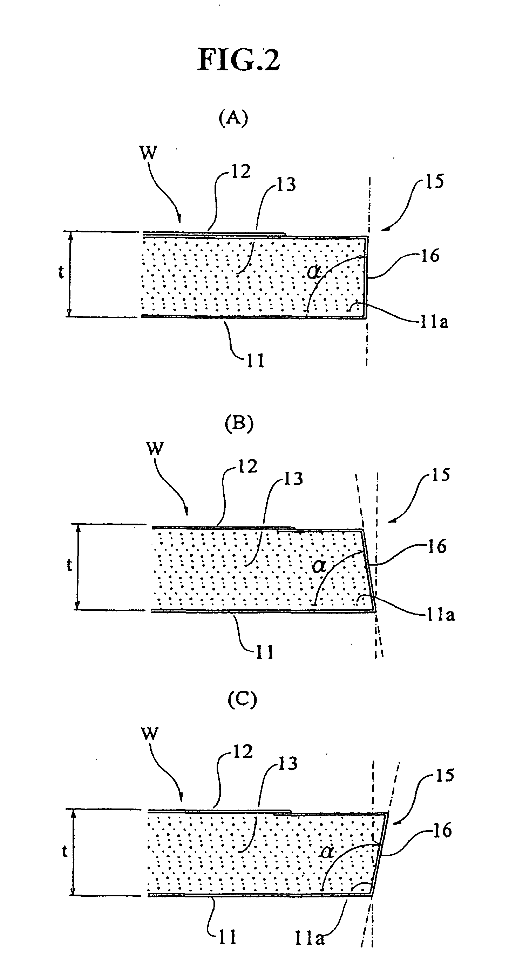

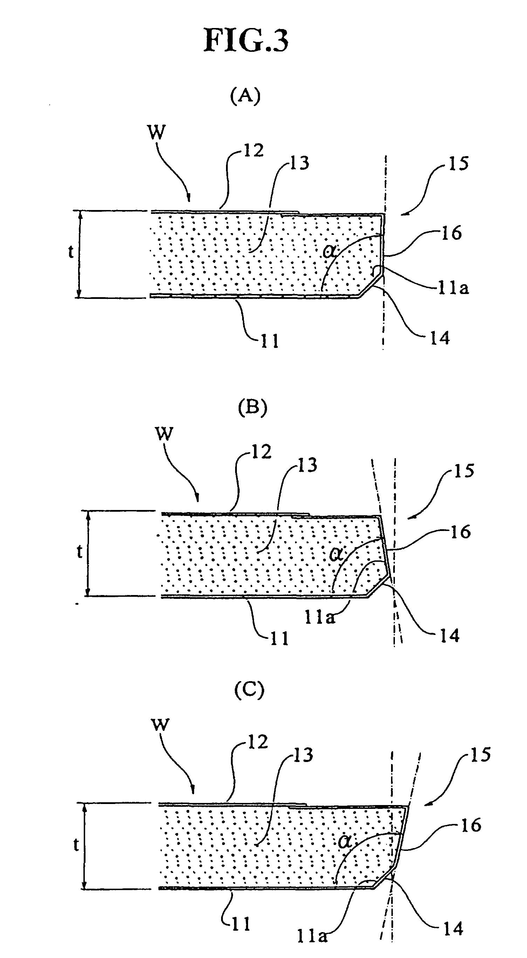

Fig. 1 is a schematic front view of an edge angle detecting device according to a preferred embodiment of the present invention, and Figs. 2 and 3 are longitudinal cross-sectional views partially showing the structures of the side edge regions of gypsum board moldings.

An edge angle detecting device 1 is disposed adjacent to a conveyor device 10 of the gypsum board producing apparatus. The edge angle detecting device 1 is provided with a light source 2 for continuously emitting light for imaging toward the side edge region of a gypsum board molding W, and a CCD image capturing device 3 for continuously taking the image of the side edge region. The CCD image capturing device 3 is connected to an image processing device 31 through a control signal line. The gypsum board molding W is in the form of a continuous strip-like plate which has a gypsum slurry 13 filled between upper and lower paper sheets 11, 12. The gypsum board molding W is positioned and successively transferred on a conveyance plane of the conveyor device 10.

The configurations of the edge in the gypsum board molding W are exemplified in Figs. 2 and 3. The edge portions 15 of the gypsum board moldings W illustrated in Fig. 2 are in a form of so-called "square edge" respectively, whereas each of the moldings W shown in Fig. 3 has the edge portion 15 in a form of so-called " bevelled edge " which includes a bevelled face 14. The edge face 16 of the gypsum board molding W is ideally formed at an edge angle α of 90 degrees (right angle), as shown in Figs. 2A and 3A. However, it is, in practical producing process, difficult to always control the edge angle α strictly at 90 degrees, and an error of the edge angle α is actually caused to a certain extent. This may result from, for example, failure of adjustment of a folding guide member (not shown) of the gypsum board producing apparatus for folding the lower paper sheet 11, or failure of adjustment of a scoring device in relation to its scoring action. In a case where an excessive setting of scoring action in the scoring device results in a relatively deep score on an inner surface 11a of the lower paper sheet 11 in contact with the gypsum slurry, the edge face 16 is excessively folded so as to shape the edge portion 15 at the edge angle α less than 90 degrees, as shown in Figs. 2B and 3B. On the other hand, if an insufficient setting of the scoring action results in a relative shallow score on the inner surface 11a, so that the edge face 16 is insufficiently folded or may cause a spring-back in the folded portion. In such a case, the edge portion 15 tends to be shaped with the edge angle α being larger than 90 degrees, as shown in Fig. 2C or 3C. In a general production condition, a preferred edge angle α is set to be in a range of angle between 80 and 90 degrees. If the edge angle α does not fall under such an permissible angle range, the gypsum board is not desirably used for a building interior finish material. Particularly, the edge angle α exceeding 90 degrees (Fig. 3C) has to be avoided since it forms an "inverse edge" degrading the working efficiency in the building interior finishing work.

As shown in Fig. 1, the light source 2 is positioned laterally of the edge portion 15 so as to continuously emit light of a predetermined frequency band level toward the portion 15. The CCD image capturing device 3 for capturing the image of the edge portion 15 is disposed above the edge portion 15. The light source 2 is preferably a high-frequency lighting type of fluorescent lamp for image processing, and more preferably, a halogen lamp. As the CCD image capturing device 3, a CCD camera provided with a CCD (charge-coupled device) may be preferably used. Preferably, the light source 2 is disposed on substantially the same plane as that of the gypsum board molding W. However, the light source 2 may be positioned slightly above the plane of the molding W. The CCD image capturing device 3 is preferably disposed vertically above the edge portion 15. However, the CCD device 3 may be located slantingly above the edge portion 15.

An L-shaped support member 6 is located laterally of the conveyor device 10, the member 6 being provided with a transverse beam section 61 and a vertical column section 62. The support member 6 is mounted on the machine frame (not shown) of the gypsum board producing apparatus so as to be displaceable in the widthwise direction of the gypsum board molding W. The light source 2 is fixedly mounted on a lower end of the column section 62 while the CCD device 3 is fixedly mounted on a distal end of the transverse section 61.

The light source 2 is connected to a power supply amplifier 21 through a control wiring, which is in turn connected to an external power source (AC 100V). The light source 2 emits a light beam when powered on. The light beam emitted from the light source 2 continuously irradiates the edge portion 15. The appearance of the edge portion 15 is imaged onto a CCD type image pickup element included in the CCD device 3.

The CCD device 3 is connected to an image processing device 31 through a control wiring. The image processing device 31 is provided with a binarizing section 32 for binarizing the video output signal from the CCD device 3 and a numeral control section 33 for computing the angle of the edge portion 15 based on the image data digitized by the binarizing section 32. The image processing device 31 is also connected to a monitoring device 35 and remote control switch 36 through a control signal line. The resultant of computation in the numeral control section 33 is displayed on the monitor device 35 as a detected value of the edge angle of the edge portion 15. The initialization, setting value input and change of setting value as to the image processing device 31 can be manually performed by the remote control switch 36.

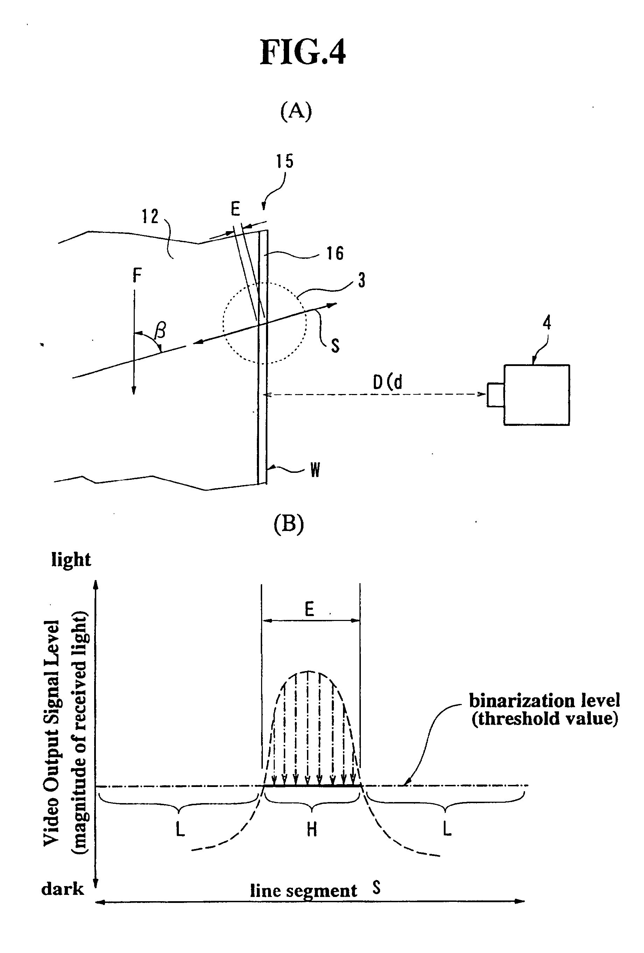

Fig. 4A is a plan view of an edge portion 15 illustrating an region to be imaged by the CCD device 3 shown in Fig. 1, and Fig. 4B is a diagram showing signal levels in the CCD device 3, in which the binarizing process in the image processing device 35 is diagrammatically shown.

As shown in Fig. 4A, the apparent edge width E of the edge portion 15 is measured along a measurement line S which is oriented to an angle β relative to a conveyance direction F of the gypsum board molding W. This angle β can be preset to be, e.g., 90 degrees or any of angles smaller than 90 degrees. The edge angle α of the gypsum board molding W as shown in Figs. 1 and 4A is smaller than 90 degrees, and therefore, the edge face 16 has a horizontally projected contour which can be picked up by the CCD device 3 located truly above the edge face 16. The light beam emitted from the light source 2 is reflected by the edge face 16, and the edge face 16 is imaged on the imaging element of the CCD device 3. The image of the edge face is then inputted into the image processing device 31 as a video output signal (analog signal) of the CCD device 3 including information on the contrast.

The analog signal inputted into the image processing device 31 is shown in Fig. 4B. The video output signal is recognized by the image processing device 31 as a set of pixels from which an image signal on the measurement line S can be extracted. Since the measurement line S relatively strongly reflects the light beam emitted from the light source 2 within the range of the edge face 16 so as to indicate a relatively intensive video output signal value, the video output signal or light-receiving level on the measurement line S can generally be recognized as a gradual increase-decrease curve with an apex located on the center of the edge face 16.

A predetermined threshold value is preset to the binarizing section 32 as a binarization level. As shown in Fig. 4B, the binarizing section 32 makes a judgment in such a manner that the video output signal equal to or higher than the threshold value (or binarization level) is a white or light part (H) and that the video output signal lower than the threshold value (or binarization level) is a black or dark part (L). As a result, the video output signal is binarized to the white (light) and black (dark) parts and is converted to be a digital signal which is recognizable with use of H/L or 1/0.

The number of pixels in the region recognized as the white or light portion (H) is counted, and the counted number of pixels is converted into the width E of the edge portion 15, which is then inputted into the numeral control section 33. The numeral control section 33 has previously stored the plate thickness "t" of the desired gypsum board molding W and can therefore compute the edge angle α on the basis of the plate thickness "t" and the value of the edge width E. The determined edge angle α is displayed on the monitor device 35.

As shown in Fig. 1, a position detecting device 4 for detecting the position of the edge portion 15 is fixedly mounted on the lower end of the vertical column 62. The position detecting device 4 is located in a lateral position with respect to the edge portion 15, so that the device 4 can detect the position of the edge portion 15 relative to the conveyor device 10. The position detecting device 4 is preferably a laser type of non-contact displacement sensor and is adapted to emit a laser beam to the edge face 16 of the edge portion 15 so as to continuously measure the distance between the position detecting device 4 and the edge portion 15. The device 4 is connected to the external power source (AC 100V) through an amplifier unit 41 and also to a programmable controller 51 through a control signal line. The measurement of distance D actually detected by the device 4 is inputted into a micro-sequencer in the programmable controller 51. A reference value of distance D, at which the CCD device 3 can be placed in a desired position, has been preset to the programmable controller 51. The micro-sequencer compares the preset reference value of distance D with the actually measured value of distance d in order to compute a difference between the actually measured value d and the preset reference value D. In order to rectify such a difference, the position detecting device 4 outputs a position correcting signal to a support-member driving device 5.

The support-member driving device 5 is disposed on the support member 6 and the device 5 includes a reversible electric motor M. The electric motor M is operatively coupled with the support member 6 through a power transmission mechanism 63 so that the entire support member 6 can be displaced in the horizontal direction. The electric motor M is connected to the external power source (AC 100V) through the controller 51 and is actuated in the forward or backward direction under the control of the controller 51 so as to move the entire support member 6 in a direction perpendicular to the conveyance direction F in accord with the position correcting signal. As a result, the CCD device 3 is placed in position in which the image of the edge portion can be desirably picked up by the CCD device 3, as well as the light source 2 is placed in a position in which the light source 2 can emit a preferred image picking-up light toward the edge portion 15.

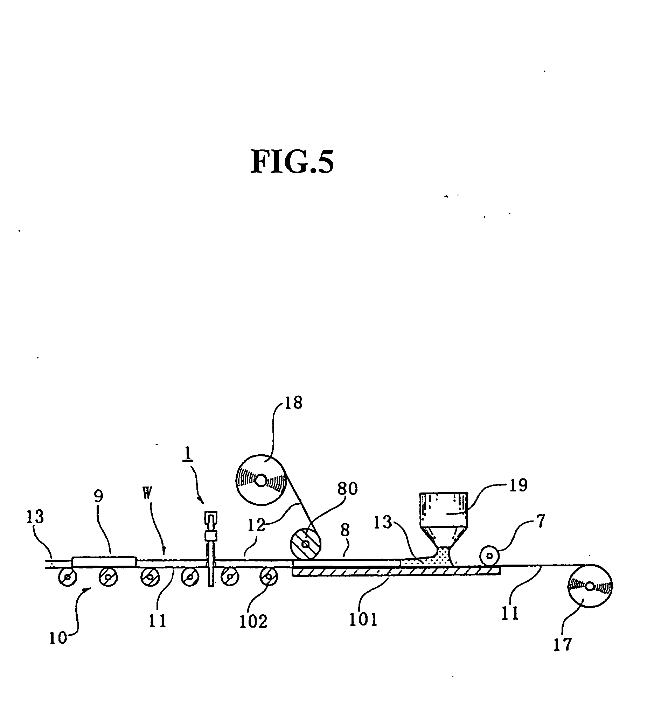

Figs. 5, 6 and 7 are respectively schematic side view, fragmentary plan view and fragmentary longitudinal cross-sectional view, which show the structure of a gypsum board producing apparatus having the aforementioned edge angle detecting device 1.

Referring to Fig. 5, the gypsum board producing apparatus is provided with two rolls 17, 18 of lower and upper paper sheets 11, 12 and an agitation type of mixer 19 for the gypsum slurry 13, as supply means for feeding materials of the gypsum board. The conveyor device 10 comprises a conveyor plate 101 having a flat and smooth top face and a plurality of rotary rollers 102 arranged in the conveyance direction F, spaced apart a predetermined distance from each other. A scoring device 7 is disposed on the conveyor plate 101 at its upstream end. The scoring device 7 is adapted to score or groove the upper side surface of the lower paper sheet 11 which is fed from the paper sheet roll 17. On the downstream end of the conveyor plate 101, there is disposed a turning roller 80 for laminating the upper paper sheet 12 fed from the paper sheet roll 18 onto the gypsum slurry 13. The gypsum board producing apparatus further comprises a framework or machine frame (not shown) for supporting these components in position.

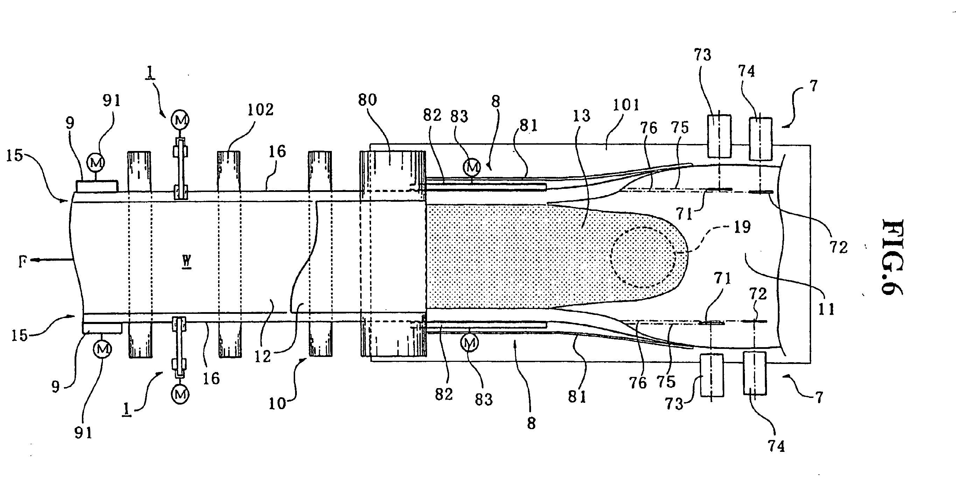

As shown in Fig. 6, the scoring device 7 comprises first and second cutters 71, 72 for respectively forming first and second scores 75, 76 on the lower paper sheet 11, and first and second electric motors 73, 74 which causes the first and second cutters 71, 72 to be driven in rotation. The cutters 71, 72 and electric motors 73, 74 are disposed in pair on the opposite sides of the lower paper sheet 11. On the conveyor plate 101 there is disposed a folding device 8 for inwardly biasing the side edge region of the lower paper sheet 11. The folding device 8 includes a stationary guide member 81 adjustably located in a predetermined position of the conveyor plate 101, a movable guide member 82 movably mounted on the conveyor plate 101, and an electric motor 83 for moving the guide member 82 in a widthwise direction of the lower paper sheet 11. The electric motor 83 is operatively coupled to the movable guide member 82 through a power transmission mechanism (not shown) which contains a reduction gear and so forth. The guide members 81, 82 and electric motor 83 are arranged in pair on the opposite sides of the lower paper sheet 11.

A pair of edge angle detecting devices 1 is located downstream of the turning roller 80 and is arranged in pair on the opposite sides of the lower paper sheet 11. Downstream of the edge angle detecting devices 1, there is arranged a pair of pressure guide members 9 which are engageable with the edge face 16 of the gypsum board molding W. An electric motor 91 is operatively coupled to each of the pressure guide members 9 through a power transmission mechanism (not shown) including a reduction gear and so forth.

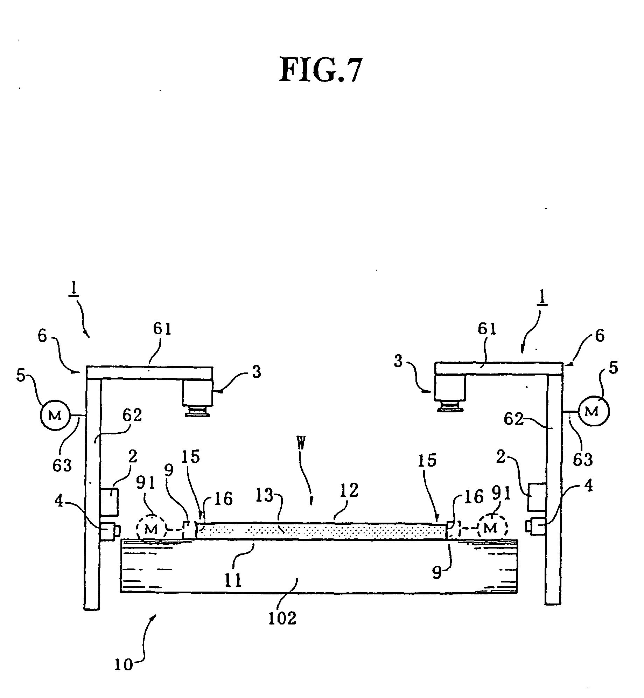

As shown in Fig. 7, each of the edge angle detecting devices 1 is provided with the light source 2, CCD device 3, position detecting device 4 and support-member driving device 5. The light source 2, CCD device 3 and position detecting device 4 are a halogen lamp, a CCD camera, and a non-contact / laser type of displacement sensor, which are fixedly mounted on the vertical column 62 and the transverse section 61 of the support member 6. The support-member driving device 5 has an electric motor M coupled to the support member 6 through a power transmission mechanism 63. As in Fig. 1, the halogen lamp, CCD camera, displacement sensor and electric motor M are respectively connected to the power supply amplifier 21, image processing device 31, amplifier unit 41 and programmable controller 51.

The gypsum board producing apparatus allows the lower paper sheet 11 to be fed from the paper sheet roll 17. As shown in Fig. 6, the scoring devices 7 energize the electric motors 73, 74 to drive the first and second cutters 71, 72 so as to form the first and second scores 75, 76 parallel to each other on the upper surface of the lower paper sheet 11. The mixer 19 agitates the raw materials of gypsum and admixtures to form a gypsum slurry 13, which is discharged onto the lower paper sheet 11. Each of the left- and right-side edge regions in the lower paper sheet 11 moving on the conveyor plate 101 is in sliding contact with the inner faces of the stationary and movable guide members 81, 82 to be folded along the first and second scores 75, 76.

The upper paper sheet 12 unwound from the paper sheet roll 18 is laminated on the gypsum slurry 13 by means of the turning roller 80. The integrated paper sheets 11, 12 and gypsum slurry 13 are shaped into a flat plate configuration to be continuously extruded onto the rollers 102 as being a gypsum board molding W, when they pass through the gap between the conveyor plate 101 and the turning roller 80. The gypsum board molding W continuously moving on the rollers 102 is roughly cut into pieces of a predetermined board length and is dried, and thereafter, the pieces are finely cut to be gypsum board products of a predetermined length by a cutting device (not shown).

Each of the side edge regions of the gypsum board molding W continuously conveyed on the rollers 102 is irradiated by the light beam emitted from the light source 2. Each edge face 16 reflects the light beam from the light source 2. The reflective light is captured by the CCD device 3 as an image of the edge face 16. The CCD device 3 continuously captures the image of edge face 16 and outputs the image data including information on the contrast (light and dark) to the corresponding image processing device 31 (Fig. 1) as an analog video output signal. The image processing device 31 extracts information of contrast (light and dark) with respect to a set of pixels corresponding to the measurement line S (Fig. 4), based on the inputted video signal, and digitizes the extracted information to a binary signal. That is, the binarizing section 32 (Fig. 1) in the image processing device 31 binarizes the contrast information on the measurement line S with reference to a preset binarization level, and counts the number of pixels indicating that the magnitude of light is equal to or higher than the binarization level (or threshold value). If the edge angle α is less than 90 degrees, the number of pixels in the binarized signal corresponding to the edge width E is counted. If the edge angle α is substantially equal to 90 degrees, the minimum number of pixels is counted. The length of line segment quantified according to the counting procedure of pixels is then inputted into the numeral control section 33 (Fig. 1) as a value representing the edge width E, and the numeral control section 33 computes the edge angle α, which is in turn transmitted to the monitor device 35 (Fig. 1). The monitor device 35 displays the edge angle α. On the other hand, if the edge portion 15 is formed into a so-called "inverse edge" in which the edge angle α exceeds 90 degrees, the entire image signal is specified as the dark part, and therefore, the count of pixels results in zero. In such a case, the numeral control section 33 does not compute the edge angle α and the monitor device 35 (Fig. 1) figures an indication meaning the state of "inverse edge".

When the "inverse edge" configuration of edge portion 15 is detected, the numeral control section 33 energizes the electric motors 91 for the pressure guide member 9 so that the member 9 is driven to engage the edge face 16. As a result, the edge face 16 is inwardly pressed to correct the "inverse edge" configuration to be a vertical face, as shown by broken line in Fig. 7. Thus, the pressure guide member 9 acts to as an edge angle rectifying device for rectifying the "inverse edge" of the edge portion 15. The numeral control section 33 further energizes the electric motors 83 (Fig. 6) to move the movable guide members 82 and also actuates a cutter position correcting device (not shown) to move the cutters 71, 72 of the scoring device 7 in the vertical direction, thereby adjusting the depth of each score 75, 76 on the lower paper sheet 11. The positional correction of the movable guide member 82 and cutters 71, 72 is performed by the feedback control associated with the detected edge angle α. The positions of the movable guide member 82 and cutters 71, 72 are controlled in harmony so as to converge the edge angle α into a range between 80 and 90 degrees.

On the contrary, if the edge angle detecting devices 1 detects the edge angle α less than 80 degrees, the numeral control section 33 energizes the electric motor 91 to separate the pressure guide member 9 apart from the edge face 16, and carries out feedback-control of the cutter position correcting device of the scoring device 7 and the electric motor 83 of the movable guide member 82, so that the edge angle α is converged within the range of angle between 80 and 90 degrees. Since the positions of the cutters 71, 72 are required to be adjusted in an extremely delicate manner, a skillful operator may finely adjust the positions of the cutters in a manual operation, while viewing the screen indication on the monitor device 35.

If the size and/or edge form of the gypsum board molding W are changed, involved in a change of the type of gypsum board product, or if the position of the molding W on the conveyor device 10 is deviated by an unexpected meander of the molding W or the like, the non-contact / laser type of displacement sensor of the position detecting devices 4 detects changes in the position of the edge portion 15 and the controller 51 actuates the electric motors M of the support-member driving devices 5 to move the entire support members 6 in the horizontal direction. As a result, the CCD camera of the CCD device 3 is moved to a position truly above the edge portion 15 and the halogen lamp of the light source 2 is displaced to a position spaced apart a predetermined distance from the edge portion 15. Thus, the CCD device 3 can automatically follow the movement of the edge portion 15 so that the CCD device 3 is always placed in position for desirably capturing the image of the edge portion 15, and the light source 2 can also be placed in position for continuously and properly emitting the light toward the edge portion 15.

Although the present invention has been described as to a preferred mode or embodiment, it is not limited to such a mode or embodiment, but may be carried out in any of various modifications or variations without departing from the scope of the invention as defined in the accompanying claims. It is appreciated that such modifications or variations fall under the scope of the present invention.

For instance, the support member 6 may be constituted by a plurality of carriers relatively displaceable with each other, the light source 2, the CCD device 3 and the position detecting device 4 being fixedly supported by the carriers respectively. Further, various other driving devices, such as servo-motors or hydraulically operated cylinder devices, may be used as the driving means for moving the support-member driving device 5, movable guide member 82 and pressure guide member 9.

### Industrial Applicability

As described above, the edge angle detecting apparatus and method according to the present invention as in claims 1-5, 8 or 9 can continuously and reliably monitor the edge angle of the gypsum board molding.

The edge angle detecting apparatus and method according to the present invention as in claim 6, 7 or 10 can follow variations in the position of the gypsum board molding transferred on the conveyor device, and continuously and reliably monitor the edge angle thereof.

The edge angle detecting apparatus and method according to the present invention as in claims 11-18 can continuously and automatically monitor the edge angle of the gypsum board molding, so as to reduce the frequency of the edge angle inspection, and can rapidly avoid continuing to produce defective products or products to be rejected, so as to improve the production efficiency on production of gypsum board products.

## Claims

1. An apparatus for detecting an edge angle which is provided on a gypsum board producing apparatus for successively producing gypsum boards with a gypsum slurry filled between upper and lower paper sheets for gypsum board, and which is adapted to detect the edge angle of the gypsum board molding continuously transferred on a conveyor device, said apparatus comprising:
a light source for continuously emitting light for imaging toward the side edge region of a plate-like gypsum board molding, said gypsum board molding continuously extending in a direction of conveyance;
an image capturing device for continuously capturing an image of said side edge region; and
image processing means for detecting the edge angle of said side edge region on the basis of image data of said image capturing device,
wherein said light source is disposed laterally of said side edge region, opposing to the edge face of said side edge region, said image capturing device is disposed above said side edge region for receiving the light reflected from said edge face, and
said image processing means is adapted to measure an apparent edge width through image processing of the image of said edge face and to detect said edge angle on the basis of the measured edge width.

2. An apparatus as defined in claim 1, wherein the light source is a high-frequency lighting type of image processing light source and the image capturing device has a light receiving portion provided with a charge coupled device.

3. An apparatus as defined in claim 2, wherein the light source is a halogen lamp, and the light receiving portion is a CCD camera.

4. An apparatus as defined in one of claims 1 through 3, wherein the image processing device comprises a binarizing portion for receiving an image signal from the image capturing device and a numerical control portion for computing the edge angle on the basis of the edge width obtained by binarization process of the binarizing portion;
the binarizing portion binarizes contrast information of the image signal with reference to a predetermined binarization level and counts the number of pixels that represents the magnitude of light equal to or higher than the binarization level; and
the numeral control portion determines the edge width on the basis of the counted number of pixels and computes the edge angle in dependence on the edge width.

5. An apparatus as defined in claim 4, wherein the binarizing portion of the image processing device sets a measurement reference line extending across the width of the gypsum board molding in the side edge region, binarizes the image signal obtained along the reference line, and counts the number of pixels in the image signal representing the magnitude of light equal to or higher than the binarization level; and
wherein the numeral control portion computes a length of the reference line corresponding to the counted number of pixels in order to detect the edge angle.

6. An apparatus as defined in one of claims 1 through 5, further comprising edge position detecting means for detecting the position of said side edge region and light-receiving portion moving means for displacing the light-receiving portion of the image capturing device in a direction perpendicular to the direction of conveyance for the gypsum board molding;
wherein said edge position detecting means has position detection means for detecting a relative position between the image capturing device and the side edge region, and
said light-receiving portion moving means is adapted to displace the light-receiving portion with respect to the gypsum board molding, so that variation in the relative position is corrected.

7. An apparatus as defined in claim 6, wherein the light receiving portion and position detection means are securely carried by a support which is movable in a widthwise direction of the gypsum board molding, and the position detection means comprises a non-contact type of position sensor which can measure a distance between the sensor and the edge portion of the molding; and
wherein the light-receiving portion moving means includes drive means for causing the support to generally move in such a manner that a value detected by the position sensor can converge at a preset value of distance.

8. A method for detecting an edge angle, which is applied to a gypsum board producing process for filling a gypsum slurry between upper and lower paper sheets for gypsum board so as to form a plate-like gypsum board molding and continuously conveying the gypsum board molding on a conveyor device, and which continuously detects the edge angle of the gypsum board molding continuously transferred, said method comprising the steps of:
continuously irradiating a side edge region of said gypsum board molding with light for imaging;
continuously capturing an image of light reflected from said side edge region with use of an imaging element;
binarizing contrast information of the image made on said imaging element, so that the image signal is binarized into a light part and a dark part with reference to a binarization level set as a threshold value, and counting the number of pixels in the signal designated as the light part; and
computing said edge angle on the basis of the counted number of pixels.

9. A method as defined in claim 8, wherein a high-frequency lighting type of light source for image processing is located in a lateral position of the side edge region so as to continuously emit light of the light source toward said side edge region, and
a light receiving means provided with a charge coupled device functioning as an image capturing element is located in an area above said side edge region, so as to receive the light reflected from an edge face of the side edge region by means of said charge coupled device.

10. A method as defined in claim 8 or 9, further comprising the steps of continuously measuring a position of the side edge region with use of a non-contact type of position sensor, and moving an image capturing element in a widthwise direction of the gypsum board molding in dependence on the measured value of the position sensor for compensating a variation in the relative position between the side edge region and the image capturing element.

11. A gypsum board producing apparatus comprising the apparatus for detecting the edge angle as defined in one of claims 1 through 7.

12. A gypsum board producing apparatus as defined in claim 11, further comprising a guide member used to fold the side edge region of the paper sheet for gypsum board and a guide-member correcting device for correcting the position and/or formation of the guide member, wherein the correcting device adjusts the position and/or formation of the guide member to correct a bending angle of the side edge region of the paper sheet, when the edge angle, which is detected by said apparatus for detecting the edge angle, does not fall under a predetermined range of angle.

13. A gypsum board producing apparatus as defined in claim 11 or 12, further comprising a scoring device for scoring the side edge region of the paper sheet for gypsum board, and scoring correction means for correcting a scoring action of the scoring device, wherein the scoring correction means adjusts the scoring action of the scoring device to correct a bending angle in the side edge region of the paper sheet, when the edge angle, which is detected by said apparatus for detecting the edge angle, does not fall under a predetermined range of angle.

14. An apparatus as defined in one of claims 11 through 13, further comprising edge angle rectifying means for rectifying the edge angle, wherein the rectifying means includes side-edge pressing means for pressing an edge face of the side edge region to rectify the edge angle, when the edge angle, which is detected by said apparatus for detecting the edge angle, does not fall under a predetermined range of angle.

15. A gypsum board producing method comprising the method as defined in one of claims 8 through 10.

16. A gypsum board producing method as defined in claim 15, regulating a bending force acting on the side edge region of the paper sheet to adjust a bending angle of the side edge region, when the edge angle does not fall under a predetermined range of angle.

17. A method for producing gypsum boards as defined in claim 15 or 16, adjusting a scoring action of a scoring device for making a score of the side edge region of the paper sheet for gypsum board, when the edge angle does not fall under a predetermined range of angle.

18. A method for producing gypsum boards as defined in one of claims 15 through 17, pressing an edge face of the side edge region to rectify said edge angle, when the edge angle does not fall under a predetermined range of angle.
